Europäisches Patentamt

European Patent Office

Office européen des brevets

(19)

(11) Veröffentlichungsnummer: **0 368 270**

**A1**

(12) **EUROPÄISCHE PATENTANMELDUNG**

(21) Anmeldenummer: **89120678.1**

(22) Anmeldetag: **08.11.89**

(51) Int. Cl.⁵: **B29B 7/74**

(30) Priorität: **11.11.88 DE 3838251**

(43) Veröffentlichungstag der Anmeldung:
**16.05.90 Patentblatt 90/20**

(84) Benannte Vertragsstaaten:
**ES GR**

(71) Anmelder: **Klöckner Ferromatik Desma GmbH**
**Riegeler Strasse 4**
**D-7831 Malterdingen(DE)**

(72) Erfinder: **Rebers, Günter, Dipl.-Ing.**
**Asternweg 2**
**D-2807 Achim(DE)**

(74) Vertreter: **Vomberg, Friedhelm, Dipl.-Phys.**
**KLÖCKNER-WERKE AG Patentabteilung**
**Klöcknerstrasse 29**
**D-4100 Duisburg 1(DE)**

(54) **Verfahren zum Zumischen fliessfähiger Zusätze zu Polyol und Vorrichtung zur Durchführung des Verfahrens.**

(57) Die Erfindung betrifft ein Verfahren zum Zumischen fließfähiger Zusätze, beispielsweise einer Vernetzerflüssigkeit und/oder einer Farbstofflösung, zu Polyol, insbesondere vor der Erzeugung von Artikeln aus PUR-Schaum, und eine Vorrichtung zur Durchführung des Verfahrens, wobei das Polyol (2) und jeder fließfähige Zusatz (4) mittels je einer Dosierpumpe (5) aus einem Tank (1) mit mehreren m³ Fassungsvermögen bzw. einem oder mehreren Liefergebinde(n) (3) in diskreten, untereinander in einem vorgegebenen festen Verhältnis stehenden Portionen einer Mischvorrichtung (7) aufgegeben werden, die aus diesen Portionen eine begrenzte Nachfüllmenge aufbereiteten Polyols für den Tagesbehälter (9) einer Vorrichtung zur Verarbeitung solchen aufbereiteten Polyols erzeugt, wobei die begrenzte Nachfüllmenge anschließend einen der Mischvorrichtung (7) nachgeschalteten Wärmetauscher (8) durchläuft, der die Temperatur der Nachfüllmenge im wesentlichen auf die - im allgemeinen erhöhte - Temperatur des Tagesbehälters (9) einstellt, und wobei die temperierte begrenzte Nachfüllmenge stets dann vom Wärmetauscher (8) dem ihm nachgeschalteten Tagesbehälter (9) zugeführt wird, wenn dessen Flüssigkeitspegel einen vorgegebenen Minimalfüllstand unterschreiten will.

Fig.1

## Verfahren zum Zumischen fließfähiger Zusätze zu Polyol und Vorrichtung zur Durchführung des Verfahrens

Die Erfindung betrifft ein Verfahren zum Zumischen fließfähiger Zusätze zu Polyol und eine Vorrichtung zur Durchführung dieses Verfahrens gemäß den Merkmalen des Oberbegriffes des Patentanspruchs 1 und denjenigen des Oberbegriffes des Patentanspruchs 4.

Polyol ist Ausgangsstoff für eine Reihe verschiedener chemischer Verfahren zur Aufbereitung oder Erzeugung für den Endverbrauch bestimmter Produkte, beispielsweise für die Erzeugung fester Kunststoffartikel wie Teilen von Haushaltsgeräten oder Schuhsohlen aus PUR-Schaum. Dabei ist Polyol selbst unter Normalbedingungen allerdings chemisch sehr reaktionsträge, so daß es zu einer Verarbeitung zunächst mit mindestens einem Zusatz zur Erhöhung seiner Reaktionsfähigkeit versetzt werden muß, was im Falle der Erzeugung von Artikeln aus PUR-Schaum ein sogenannter Vernetzer ist, der dem Polyol vor dessen Zusammenführung mit Isocyanat zur Bildung des PUR-Schaums zuzumischen ist. Zur Beeinflussung der Eigenschaften des Endproduktes können darüber hinaus weitere Zusätze zum Polyol erforderlich sein, im Falle der Erzeugung von Artikeln aus PUR-Schaum beispielsweise ein Farbstoffzusatz. Als sinnvoll hat sich dabei in jedem Fall herausgestellt, die Zusätze dem Polyol im gleichen Aggregatzustand wie dem ihm eigenen, nämlich dem flüssigen, beizufügen.

Das Zumischen der fließfähigen Zusätze zum Polyol erfolgt entweder direkt beim Hersteller des Polyols und/oder der Zusätze, wobei das derart aufbereitete Polyol dann normalerweise sehr rasch zum Verarbeiter transportiert werden muß, da das aufbereitete Polyol üblicherweise seine für die weitere Verarbeitung erforderlichen Eigenschaften innerhalb eines kürzeren Zeitraums - nach dem Zumischen eines üblichen flüssigen Vernetzers beispielsweise innerhalb von 3 bis 6 Tagen - aufgrund chemischer Umsetzungen wieder verliert, oder der Verarbeiter führt die Zumischung nach den streng einzuhaltenden Vorschriften des/der Hersteller(s) unmittelbar vor der anstehenden Verarbeitung selbst durch, wobei es - jedenfalls bei den Erzeugern von festen Kunststoffartikeln aus PUR-Schaum - branchenüblich ist, daß das Polyol im allgemeinen - wie übrigens auch das vorgenannte aufbereitete Polyol - in 200 l-Rollenfässern vorliegt und die Zusätze in Liefergebinden gelagert werden, die maximal als 200 l-Rollenfässer ausgebildet sind. Stand der Technik ist dabei, daß ein aufzubereitendes 200 l-Rollenfaß mit Polyol zunächst in einem Heizschrank auf eine - erhöhte -Temperatur gebracht wird, die so gewählt ist, daß das zu erzeugende aufbereitete Polyol nach dem Abschluß des Zumischens im wesentlichen die für die weitere Verarbeitung -beispielsweise nach dem Zumischen eines Vernetzers in einer Reaktionsgießmaschine zur Erzeugung von festen Kunststoffartikeln aus PUR-Schaum - erforderliche Temperatur aufweist, daß diesem aufgeheizten Polyol nach dem Öffnen des Fasses die jeweils vorschriftsmäßig abgefüllte Menge jedes Zusatzes von Hand hinzugefügt wird und daß der Faßinhalt dann mittels eines - ggf. von Hand - in einer gerüstartigen Halterung jedenfalls vertikal verschiebbaren elektromechanischen Rührwerks über längere Zeit einem Mischvorgang unterzogen wird. Abschließend wird das so aufbereitete Polyol in den sogenannten Tagesbehälter der jeweiligen Vorrichtung zur Verarbeitung des Polyols, beispielsweise einer Reaktionsgießmaschine zur Erzeugung fester Kunststoffartikel aus PUR-Schaum, umgefüllt, wobei dieser Tagesbehälter im allgemeinen einerseits eine Vorrichtung zur Aufrechterhaltung einer vorgegebenen Temperatur und andererseits ein internes Rührwerk besitzt.

Neuerdings ist jedoch aufgrund des zunehmenden Umweltschutz-Bewußtseins und entsprechender Vorschriften ein ernsthaftes Entsorgungsproblem bezüglich der entsprechenden 200 l-Rollenfässer für die Verarbeiter von Polyol - jedenfalls für solche Verarbeiter, die Polyol zu festen Kunststoffartikeln aus PUR-Schaum weiterverarbeiten - entstanden. Abhilfe kann da - wie nach brancheninternen Informationen bereits ausprobiert - die Verwendung größerer - fest installierter oder auf Spezialpaletten verfahrbarer - Tanks von einigen m³ Tankinhalt bei den Verarbeitern schaffen, die dann mit speziellen Tankfahrzeugen in größeren Abständen nachgefüllt werden. Dies insbesondere auch dann, wenn bei einem Verarbeiter mehrere Vorrichtungen zur Verarbeitung von Polyol gleichzeitig zu versorgen sind.

Bei der Verwendung solcher größeren Tanks muß jedoch wegen der begrenzten Lagerfähigkeit mit Zusätzen aufbereiteten Polyols die Zumischung von einem oder mehreren Zusätzen zum Polyol in jedem Fall erst beim Verarbeiter möglichst kurzfristig vor der Nachfüllung des/der Tagesbehälter(s) erfolgen. Die Anpassung des bisherigen Verfahrens zum Zumischen von Zusätzen wie fließfähigem Vernetzer und/oder Farbstofflösungen zu Polyol verlangt dann zunächst das häufige Abfüllen einer größeren Menge Polyols aus dem Tank in ein -beispielsweise einem 200 l-Rollenfaß entsprechendes - Zwischengefäß, bevor dieses Zwischengefäß entsprechend der bisherigen Behandlung der 200 l-Rollenfässer erwärmt werden und sein Inhalt mit fließfähigen Zusätzen versetzt, mittels eines elektromechanischen Rührwerks einem Mischvorgang unterworfen und dann in den Tagesbehälter einer Vorrichtung zur Verarbeitung des aufbereiteten Polyols umgefüllt werden kann. Diese Verfahrensweise erhöht allerdings einerseits den schon beim bisherigen Verfahren erforderlichen erheblichen Arbeitsaufwand und andererseits das bisher schon in Kauf genommene Gefährdungspotential für die Umwelt und die mit der Verfahrensdurchführung betrauten Personen, da jeder Umgang mit offenen Gefäßen, die chemische Substanzen enthalten, und insbesondere jeder Umfüllvorgang mit solchen Gefäßen stets die Gefahr in sich birgt, daß dabei die jeweilige Substanz unbeabsichtigt freigesetzt wird, was zumindest umfangreiche, arbeitsaufwendige Reinigungsprozeduren zur Folge hat.

Die vorliegende Erfindung hat sich daher die Aufgabe gestellt, ein Verfahren anzugeben, mit dessen Hilfe Polyol unter Zumischung von fließfähigen Zusätzen, beispielsweise einer Vernetzerflüssigkeit und/oder einer Farbstofflösung, weitgehend ohne Einsatz menschlicher Arbeitskraft und ohne die Gefahr des unbeabsichtigten Freisetzens chemischer Substanzen von einem Liefergebinde oder Tank in den Tagesbehälter einer Vorrichtung zur Verarbeitung aufbereiteten Polyols, beispielsweise einer Reaktionsgießmaschine zur Erzeugung fester Kunststoffartikel aus PUR-Schaum, umgefüllt werden kann, wobei jeder Zusatz in einem eigenen Liefergebinde zur Verfügung gestellt wird. Darüber hinaus hat sich die Erfindung gleichzeitig die Aufgabe gestellt, eine Vorrichtung zur Durchführung des vorgenannten Verfahrens anzugeben, wobei diese Vorrichtung auch noch die Anforderung an möglichst einfache Handhabbarkeit und Kompaktheit erfüllen soll.

Die Erfindung löst diese Aufgabe hinsichtlich des Verfahrens mit Hilfe der Merkmale des kennzeichnenden Teils des Patentanspruchs 1 und hinsichtlich der Vorrichtung mit den Merkmalen des kennzeichnenden Teils des Patentanspruchs 4.

Die erfindungsgemäße Verfahrensweise, bei der das Polyol und jeder fließfähige Zusatz stets nur dann in diskreten, untereinander in einem vorgegebenen festen Verhältnis stehenden Portionen einer Mischvorrichtung aufgegeben werden und anschließend vor dem Einlauf in den Tagesbehälter einen Wärmetauscher durchlaufen, wenn der Flüssigkeitspegel des Tagesbehälters einen vorgegebenen Minimalfüllstand unterschreiten will, erweist sich deshalb als besonders vorteilhaft, weil auf diese Weise nach der Erstinstallation und dem Anschluß der Mischvorrichtung an den Tank für das Polyol und jedes Liefergebinde für jeden fließfähigen Zusatz stets ein vorgegebener Minimalfüllstand des Tagesbehälters mit vorschriftsmäßig aufbereitetem Polyol ohne weiteren Einsatz menschlicher Arbeitskraft und -zeit - abgesehen vom Auswechseln der Liefergebinde von Zusätzen - und ohne Gefahr eines unbeabsichtigten Freisetzens von reinem oder aufbereitetem Polyol aufrechterhalten werden kann. Darüber hinaus gestattet die Anwendung dieses Verfahrens und die Verwendung der zu seiner Durchführung entwickelten Vorrichtung als weiteren Vorteil eine solche Festlegung der vorgenannten Portionen, daß die daraus entstehende Nachfüllmenge jedesmal nur eine Mischvorrichtung und einen Wärmetauscher mit jeweils geringem räumlichen Platzbedarf erfordert, wobei mit weiterem Vorteil insbesondere entweder geeignete Statikmischer bekannter Art oder geeignete Dynamikmischer bekannter Art als Mischvorrichtung verwendet werden können. Damit kann die gesamte Vorrichtung zum Zumischen und Temperieren oder auch eine Mehrzahl derartiger Vorrichtungen als kompakte(r) Block/Blöcke - ggf. unmittelbar auf der Palette des Tanks für das Polyol - ausgeführt werden.

In einer weiteren besonders vorteilhaften Ausführungsform des erfindungsgemäßen Verfahrens und der zu seiner Durchführung erforderlichen Vorrichtung weist letztere zwischen dem Ausgang des Wärmetauschers und dem Eingangsbereich der Mischvorrichtung eine Rezirkulationsleitung auf, die es gestattet, während der Pausenzeit zwischen zwei diskreten Nachfüllphasen des Tagesbehälters das in der Mischvorrichtung und dem Wärmetauscher - sowie in der Rezirkulationsleitung - anstehende aufbereitete und temperierte Polyol im Kreislauf zu fahren, um der Gefahr einer Entmischung und/oder Temperaturänderung dieses Polyols vor der folgenden Nachfüllphase zu begegnen.

Weitere vorteilhafte Ausgestaltungen der erfindungsgemäßen Vorrichtung werden durch die Merkmale der kennzeichnenden Teile der Unteransprüche 5 bis 8 sowie 12 bis 16 in Verbin dung mit den jeweils angegebenen Rückbeziehungen auf vorangegangene Ansprüche gegeben.

Die Erfindung wird nachfolgend durch in der Zeichnung dargestellte Ausführungsbeispiele erfindungsgemäßer Vorrichtungen erläutert. Es zeigen:

Fig. 1: Schematische Darstellung einer erfindungsgemäßen Vorrichtung zum Zumischen fließfähiger Zusätze zu Polyol im Schnitt.

Fig. 2: Schematische Darstellung einer anderen Ausführungsform des Eingangsteils einer erfindungsgemäßen Vorrichtung.

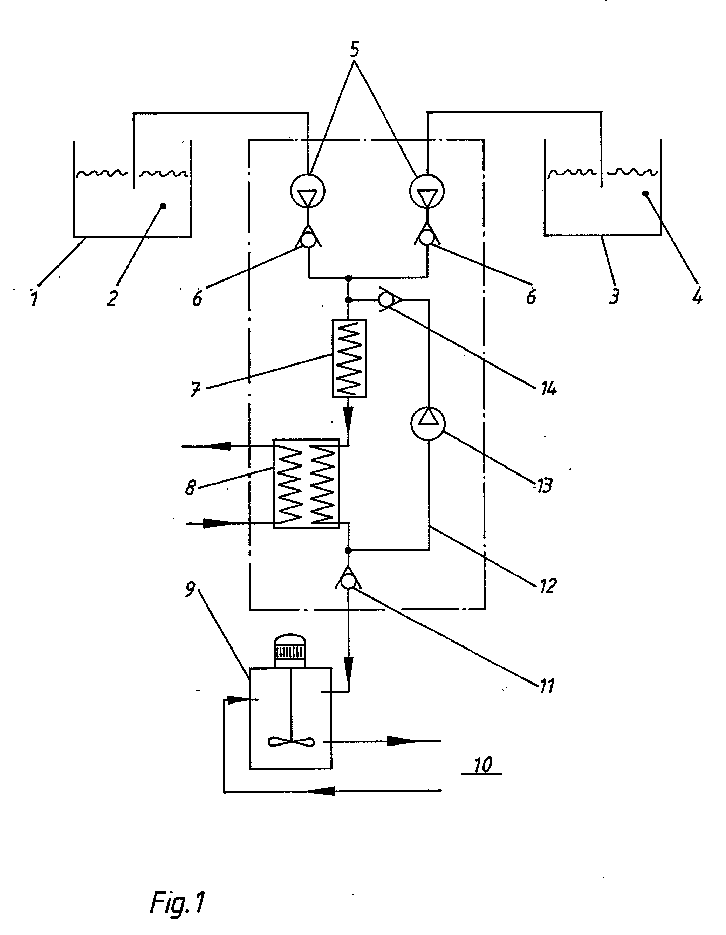

Fig. 1 zeigt zunächst einen Tank 1, der mit Polyol 2 gefüllt ist, und ein Liefergebinde 3, das einen Vernetzer 4 in fließfähigem Zustand enthält. Tank 1 und Liefergebinde 3 sind über je eine drehzahlgeregelte Dosierpumpe 5 mit nachgeschaltetem Rückschlagventil 6 mit einer Mischvorrichtung 7, vorzugsweise einem Statikmischer bekannter Art, verbunden. Der Mischvorrichtung 7 ist ein Wärmetauscher 8 nachgeschaltet, in dem das mit Vernetzer 4 vermischte Polyol 2 auf die Temperatur des dem Wärmetauscher wiederum nachgeschalteten Tagesbehälters 9 eingestellt wird. Der mit einem Rührwerk und einer nicht dargestellten Heizvorrichtung versehene Tagesbehälter 9 ist in eine der kreislaufartigen Versorgungsleitungen eines hier nur angedeuteten Mischkopfes 10 einer Vorrichtung zum Reaktionsgießen fester Kunststoffartikel aus PUR-Schaum integriert. Zwischen dem Wärmetauscher 8 und dem Tagesbehälter 9 ist ein weiteres Rückschlagventil 11 installiert.

Außerdem ist zwischen dem Ausgang des Wärmetauschers 8 und dem Eingangsbereich der Mischvorrichtung 7 eine Rezirkulationsleitung 12 angeordnet, in die einerseits eine Rezirku lationspumpe 13 und andererseits ein weiteres Rückschlagventil 14 integriert ist.

Wenn eine - in der Fig. 1 nicht dargestellte - Füllstandssonde bekannter Art, beispielsweise eine kapazitive Füllstandssonde, ein dem Unterschreiten einer vorgegebenen Minimalfüllung des Tagesbehälters 9 entsprechendes Signal an eine - ebenfalls in der Fig. 1 nicht dargestellte - Steuer-und Regeleinheit bekannter Art abgibt, veranlaßt diese, daß einerseits die Dosierpumpen 5 eingeschaltet werden und andererseits die Rezirkulationspumpe 13 abgeschaltet wird. Der Betrieb der Dosierpumpen 5 baut nunmehr in allen von diesen zum Tagesbehälter verlaufenden Leitungen einen Druck auf, der einerseits die Rückschlagventile 6 und 11 öffnet, das Rückschlagventil 14 jedoch schließt. Das zu diesem Zeitpunkt in der Mischvorrichtung und im Wärmetauscher anstehende aufbereitete und temperierte Polyol wird in den Tagesbehälter 9 gedrückt, während gleichzeitig von den drehzahlgeregelten Dosierpumpen 5, die mit vorgegebenen unterschiedlichen Drehzahlen und jeweils gleicher Laufzeit arbeiten, diskrete Portionen von frischem Polyol 2 und frischem Vernetzer 4 in einem untereinander vorgegebenen festen Verhältnis in die Mischvorrichtung 7 befördert werden. Nach dem Durchgang durch die Mischvorrichtung 7 gelangt das nunmehr durch Zumischen des Vernetzers 4 zum Polyol 2 entstandene aufbereitete Polyol in den Wärmetauscher 8, in dem es auf die Temperatur des nachgeschalteten Tagesbehälters 9 eingestellt wird, um nach dem Durchlauf durch den Wärmetauscher 8 in diesen Tagesbehälter 9 eingegeben zu werden.

Wenn die vorgegebene Laufzeit der Dosierpumpen 5 beendet und damit die vorgegebene Nachfüllmenge aufbereiteten und temperierten Polyols für den Tagesbehälter 9 erzeugt worden ist, schaltet die vorgenannte Steuer- und Regeleinheit einerseits die Dosierpumpen 5 ab und andererseits die Rezirkulationspumpe 13 an. Dadurch entsteht ein vom Tagesbehälter 9 zu den Dosierpumpen 5 gerichtetes Druckprofil, das die Rückschlagventile 6 und 11 schließt, das Rückschlagventil 14 dagegen öffnet. Der in der Mischvorrichtung 7 und im Wärmetauscher 8 verbliebene Rest der zuletzt erzeugten Nachfüllung für den Tagesbehälter 9 wird nun gemeinsam mit dem älteren Materialrest aus der Rezirkulationsleitung 12 in dieser, in der Mischvorrichtung 7 und im Wärmetauscher 8 so lange im Kreislauf gefahren, um Temperaturverluste und/oder Entmischungen zu vermeiden, bis die Füllsonde des Tagesbehälters 9 eine erneute Nachfüllung verursacht.

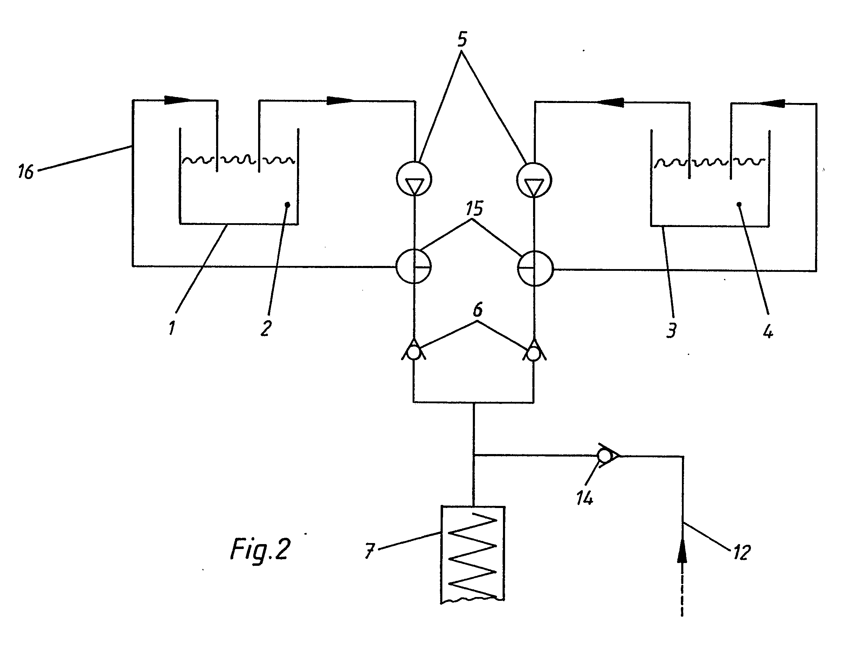

Fig. 2 zeigt im Gegensatz zu Fig. 1 zwischen den Dosierpumpen 5 und den Rückschlagventilen 6 je ein - hier der Einfachheit halber als Dreiwegeventil dargestelltes - Umschaltventil 15, wobei diese Umschaltventile 15 bei Dauerbetrieb der Dosierpumpen 5 das Polyol 2 aus dem Tank 1 und einen Vernetzer 4 aus dem Liefergebinde 3 entweder zur Mischvorrichtung 7 oder in je eine Rücklaufleitung 16 zum Tank 1 bzw. zum Liefergebinde 3 weiterleiten. Das Umschalten erfolgt durch eine hier nicht dargestellte Steuer- und Regeleinheit bekannter Art, die von den Signalen einer hier ebenfalls nicht dargestellten - vorzugsweise kapazitiven - Füllstandssonde im Tagesbehälter 9 angesteuert wird. Der im unteren Teil der Fig. 2 angedeutete Rest der Gesamtvorrichtung entspricht den in Fig. 1 dargestellten Teilen der Vorrichtung.

Mit dieser Ausführungsform der erfindungsgemäßen Vorrichtung können sowohl das Polyol 2 als auch alle fließfähigen Zusätze - beispielsweise ein Vernetzer 4 - ständig unter konstantem Druck in einem Kreislauf gefahren werden, wobei dieser Kreislauf mittels der Umschaltventile 15 nur dann -verhältnismäßig kurzfristig - unterbrochen wird, wenn die Mischvorrichtung 7 beschickt werden muß. Der Vorteil dieser Verfahrensweise ist dabei dadurch gegeben, daß die Einhaltung der Mengenvorgaben für die einzelnen Komponenten nicht durch Anfahr- und Abbremsvorgänge der Dosierpumpen 5 verfälscht werden kann. Die Rezirkulationspumpe 13 wirkt im vorliegenden Fall gegensinnig zum gegenüber der Mischvor richtung 7 geöffneten Zustand der Umschaltventile 15 anstatt zum Fahrbetrieb der Dosierpumpen 5 im in Fig. 1 dargestellten Fall; die Tätigkeit der Rückschlagventile 11 und 14 bleibt ungeändert. Das Erfordernis der absperrenden Wirkung der Rückschlagventile 6 reduziert sich jetzt auf den Fall, daß eine oder mehrere Dosierpumpen 5 bei zur Mischvorrichtung 7 geöffneten Umschaltventilen 15 nicht mit der vorgegebenen Drehzahl arbeiten und daher den von ihnen zu erzeugenden Druck nicht aufrechterhalten.

Die dargestellten Ausführungsformen stellen selbstverständlich keine Einschränkung des erfindungsgemäßen Verfahrens und der zur Durchführung dieses Verfahrens erforderlichen erfindungsgemäßen Vorrichtung dar, wie sie in ihrem vollen Umfang durch die Patentansprüche 1 und 4 beschrieben werden.

1 Tank
2 Polyol
3 Liefergebinde
4 Vernetzer
5 Dosierpumpen
6,11,14 Rückschlagventile
7 Mischvorrichtung
8 Wärmetauscher
9 Tagesbehälter
10 Mischkopf
12 Rezirkulationsleitung
13 Rezirkulationspumpe
15 Umschaltventile
16 Rücklaufleitungen

**Ansprüche**

1. Verfahren zum Zumischen fließfähiger Zusätze zu Polyol, insbesondere vor der Erzeugung von Artikeln aus PUR-Schaum, bei dem aus dem Polyol und den jeweils in diskreten, untereinander in einem vorgegebenen festen Verhältnis stehenden Portionen zugegebenen fließfähigen Zusätzen in einem Mischvorgang aufbereitetes Polyol für den Tagesbehälter einer Verarbeitungsmaschine erzeugt und dieses dem Tagesbehälter zugeführt wird, dadurch gekennzeichnet, daß der Mischvorgang zur Erzeugung aufbereiteten Polyols erst durchgeführt wird, wenn der Flüssigkeitspegel im Tagesbehälter einen vorgegebenen Minimalfüllstand unterschreitet, daß bei jedem Mischvorgang in einer Mischvorrichtung eine begrenzte Nachfüllmenge für den Tagesbehälter erzeugt wird und daß die Nachfüllmenge aufbereiteten Polyols vor der Zuführung in den Tagesbehälter einen Wärmetauscher durchläuft und auf eine der Temperatur des Tagesbehälters entsprechende Temperatur erwärmt wird.

2. Verfahren nach Anspruch 1, dadurch gekennzeichnet, daß die erwärmte begrenzte Nachfüllmenge aufbereiteten Polyols klein ist gegenüber der Gesamtfüllmenge des Tagesbehälters.

3. Verfahren nach Anspruch 1 oder 2, dadurch gekennzeichnet, daß die nach dem Nachfüllen des Tagesbehälters verbliebene Restmenge aufbereiteten Polyols in den Pausenzeiten zwischen zwei Nachfüllphasen des Tagesbehälters zwischen dem Ausgang des Wärmetauschers und dem Eingangsbereich der Mischvorrichtung rezirkuliert wird.

4. Vorrichtung zur Durchführung des Verfahrens nach einem der Ansprüche 1 bis 3, mit einem aufbereitetes Polyol enthaltenden Tagesbehälter für eine Verarbeitungsmaschine, dadurch gekennzeichnet, daß ein Tank (1) von mehreren m³ Fassungsvermögen für das Polyol (2) und ein oder mehrere Liefergebinde (3) für den Zusatz bzw. die Zusätze (4) vorgesehen sind, die über je eine Dosierpumpe (5) mit einer Mischvorrichtung (7) verbunden sind und daß der Mischvorrichtung (7) ein Wärmetauscher (8) nachgeschaltet und dem Wärmetauscher (8) der Tagesbehälter (9) für das aufbereitete Polyol nachgeordnet ist.

5. Vorrichtung nach Anspruch 4, dadurch gekennzeichnet, daß die Dosierpumpen (5) drehzahlgeregelt sind und nach einmaliger fester Vorgabe ihrer Drehzahlen und ihrer - jeweils gleichen - Laufzeit von einer Steuer-und Regeleinheit betätigt werden, die von den Signalen einer - vorzugsweise kapazitiven - Füllstandssonde im Tagesbehälter (9) angesteuert wird.

6. Vorrichtung nach Anspruch 4, dadurch gekennzeichnet, daß die Dosierpumpen (5) mittels je eines zwischen ihnen und der Mischvorrichtung (7) installierten Umschaltventils (15) durchgehend entweder auf die Mischvorrichtung (7) oder auf je eine Rücklaufleitung (16) zum Tank (1) bzw. zu dem/den Liefergebinde(n) (3) arbeiten, wobei die Umschaltventile (15) von einer Steuer- und Regeleinheit betätigt werden, die von den Signalen einer - vorzugsweise kapazitiven - Füllstandssonde im Tagesbehälter (9) angesteuert wird.

7. Vorrichtung nach Anspruch 6, dadurch gekennzeichnet, daß die Dosierpumpen (5) drehzahlgeregelt sind und fortlaufend mit jeweils vorgegebener konstanter Drehzahl arbeiten.

8. Vorrichtung nach Anspruch 6 oder 7, dadurch gekennzeichnet, daß die Umschaltventile (15) gegenüber der Mischvorrichtung (7) entweder gleichzeitig geschlossen oder gleichzeitig geöffnet sind.

9. Vorrichtung nach einem der Ansprüche 4 bis 8, dadurch gekennzeichnet, daß die Mischvorrichtung (7) als Statikmischer ausgebildet ist.

10. Vorrichtung nach einem der Ansprüche 4 bis 8, dadurch gekennzeichnet, daß die Mischvorrichtung (7) als Dynamikmischer ausgebildet ist.

11. Vorrichtung nach einem der Ansprüche 4 bis 10, dadurch gekennzeichnet, daß zwischen dem Ausgang des Wärmetauschers

(8) und dem Eingangsbereich der Mischvorrichtung (7) eine Rezirkulationsleitung (12) installiert ist.

12. Vorrichtung nach Anspruch 11, dadurch gekennzeichnet, daß in die Rezirkulationsleitung (12) eine Rezirkulationspumpe (13) integriert ist.

13. Vorrichtung nach Anspruch 12, dadurch gekennzeichnet, daß die Rezirkulationspumpe (13) wechselweise mit den Dosierpumpen (5) oder nur dann betrieben wird, wenn die Umschaltventile (15) gegenüber der Mischvorrichtung (7) geschlossen sind.

14. Vorrichtung nach einem der Ansprüche 11 bis 13, dadurch gekennzeichnet, daß in der Rezirkulationsleitung (12) ein Rückschlagventil (14) angeordnet ist, das bei in Betrieb befindlichen Dosierpumpen (5) oder dann verschlossen wird, wenn die Umschaltventile (15) gegenüber der Mischvorrichtung (7) geöffnet sind.

15. Vorrichtung nach einem der Ansprüche 4 bis 14, dadurch gekennzeichnet, daß in den Verbindungsleitungen zwischen den Dosierpumpen (5) und dem Eingangsbereich der Mischvorrichtung (7) bzw. zwischen den Umschaltventilen (15) und dem Eingangsbereich der Mischvorrichtung (7) je ein Rückschlagventil (6) angeordnet ist, das die jeweils zugehörige Verbindungsleitung absperrt, wenn die Dosierpumpen (5) bei nicht vorhandenen Umschaltventilen (15) außer Betrieb sind bzw. bei geöffneten Umschaltventilen (15) nicht mit den vorgegebenen Drehzahlen arbeiten.

16. Vorrichtung nach einem der Ansprüche 4 bis 15, dadurch gekennzeichnet, daß in der Verbindungsleitung zwischen Wärmetauscher (8) und Tagesbehälter (9) ein Rückschlagventil (11) angeordnet ist, das diese Verbindungsleitung absperrt, wenn die Dosierpumpen (5) bei nicht vorhandenen Umschaltventilen (15) außer Betrieb sind bzw. bei geöffneten Umschaltventilen (15) nicht mit den vorgegebenen Drehzahlen arbeiten.

*Fig. 1*

Fig.2

EP 0 368 270 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-1 279 406 (AUTOCOUSSIN) <br> * Zusammenfassung; Figur * <br> --- | 1,4 | B 29 B 7/74 |
| A | EP-A-0 080 643 (BAYER) <br> * Zusammenfassung; Figur * <br> --- | 1 | |
| A | DE-A-2 721 169 (DRAISWERKE) <br> --- | | |
| A | DE-A-2 054 605 (FREUDENBERG) <br> ----- | | |

RECHERCHIERTE SACHGEBIETE (Int. Cl.5)

B 29 B

Der vorliegende Recherchenbericht wurde für alle Patentansprüche erstellt

| Recherchenort | Abschlußdatum der Recherche | Prüfer |
|---|---|---|
| DEN HAAG | 22-01-1990 | PEETERS S. |